# EUROPEAN PATENT SPECIFICATION

(11) **EP 3 170 069 B1**
(45) Date of publication and mention of the grant of the patent: **24.07.2019**
(21) Application number: 15736718.6
(22) Date of filing: 22.06.2015
(51) Int. Cl.: G06F 7/552, G09C 1/00

(54) **VECTOR SCALING INSTRUCTIONS FOR USE IN AN ARITHMETIC LOGIC UNIT**
VEKTORSKALIERUNGSANWEISUNGEN ZUR VERWENDUNG IN EINER ARITHMETISCHEN LOGIKEINHEIT
INSTRUCTIONS DE MISE À L'ÉCHELLE D'UN VECTEUR DESTINÉES À UNE UTILISATION DANS UNE UNITÉ LOGIQUE ARITHMÉTIQUE

(30) Priority: 15.07.2014 US 201414331991
(43) Date of publication of application: 24.05.2017
(73) Proprietor: Qualcomm Incorporated, San Diego, CA 92121-1714 (US)
(72) Inventor: CHEN, Lin, San Diego, California 92121-1714 (US); GRUBER, Andrew Evan, San Diego, California 92121-1714 (US); JIAO, Guofang, San Diego, California 92121-1714 (US); HO, Chiente, San Diego, California 92121-1714 (US); ARGADE, Pramod Vasant, San Diego, California 92121-1714 (US)
(74) Representative: Howe, Steven
(86) International application number: PCT/US2015/036960
(87) International publication number: WO 2016/010681

(56) References cited:
- GB-A- 2 483 902
- US-A1- 2003 223 465
- US-A1- 2014 136 582
- Anonymous: "AMD GRAPHICS CORES NEXT (GCN) ARCHITECTURE", White Paper - AMD, 30 June 2012 (2012-06-30), XP055217702, Retrieved from the Internet: URL:https://www.amd.com/Documents/GCN_Arch itecture_whitepaper.pdf [retrieved on 2015-10-01]

## Description

### TECHNICAL FIELD

This disclosure relates to vector scaling in computer processing.

### BACKGROUND

Vector normalization is an operation on a vector that requires computing the length of the vector and then dividing each component of the vector by the computed length of the vector. If the length of a three-dimensional vector (x, y, z) is computed as the square root of (x²+y²+z²), such a computation can overflow the registers storing the intermediate results of the computation if the (x, y, z) values of the vector are large.

### SUMMARY

This disclosure presents techniques for vector scaling in computer processing. According to the techniques of this disclosure, before a vector is normalized, the vector can be scaled so that computing the length of the vector during normalization will not overflow the registers storing intermediate results of computing the length of the vector. An arithmetic and logic unit (ALU) of a graphics processing unit (GPU) may be configured to execute a three-cycle scale instruction for performing vector downscaling. The instruction for performing vector downscaling provided by the ALU may potentially perform the vector downscaling relatively more efficiently than software-based vector downscaling.

In one example of the disclosure, a method for scaling a vector may include receiving, by at least one processor, components of a vector, wherein each of the components of the vector comprises at least an exponent. The method may further include determining, by the at least one processor, a maximum exponent out of respective exponents of the components of the vector. The method may further include determining, by the at least one processor, a scaling value based at least in part on the maximum exponent. The method may further include scaling, by an arithmetic logic unit (ALU) of the at least one processor, the vector by subtracting the scaling value from each of the respective exponents of the components of the vector.

In another example of the disclosure, an apparatus for scaling a vector may include a memory configured to store components of a vector, wherein each of the components of the vector comprises at least an exponent. The apparatus may further include at least one processor configured to determine a maximum exponent out of respective exponents of the components of the vector, and determine a scaling value based at least in part on the maximum exponent. The apparatus may further include an arithmetic logic unit (ALU) configured to scale the vector by subtracting the scaling value from each of the respective exponents of the components of the vector.

In another example of the disclosure, an apparatus for scaling a vector may include means for receiving components of a vector, wherein each of the components of the vector comprises at least an exponent. The apparatus may further include means for determining a maximum exponent out of respective exponents of the components of the vector. The apparatus may further include means for determining a scaling value based at least in part on the maximum exponent. The apparatus may further include means for scaling the vector by subtracting the scaling value from each of the respective exponents of the components of the vector.

In another example of the disclosure, a computer-readable storage medium may store instructions that, when executed, cause one or more programmable processors to: receive components of a vector, wherein each of the components of the vector comprises at least an exponent; determine a maximum exponent out of respective exponents of the components of the vector; determine a scaling value based at least in part on the maximum exponent; and scale the vector, by subtracting the maximum exponent from each of the respective exponents of the components of the vector.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example computing device that may be configured to implement one or more aspects of this disclosure.
FIG. 2 is a block diagram illustrating example implementations of the CPU, the GPU, and the system memory of FIG. 1 in further detail.
FIG. 3 is a conceptual diagram illustrating an example three-dimensional vector that may be scaled according to the techniques disclosed in the disclosure.
FIG. 4 is a conceptual diagram illustrating an example floating point format for representing each component of a vector.
FIG. 5 is a flowchart illustrating an example process for scaling a vector.

### DETAILED DESCRIPTION

In general, this disclosure describes techniques for scaling a vector via hardware so that a vector normalization operation will not overflow the registers storing the intermediate results of the operation. In one example, a processor may execute software code for scaling a vector. For a three-dimensional vector, the software code may include code for determining the largest component of the three-dimensional vector, and dividing each component of the three-dimensional vector by the largest component. However, software code for scaling a vector may be slower than hardware-based techniques for scaling a vector. As such, a hardware-based approach for scaling a vector may increase performance.

Processors such as a central processing unit (CPU) or a graphics processing unit (GPU) may include a hardware arithmetic logic unit (ALU). The ALU may be a digital circuit that is able to quickly perform integer arithmetic and logical operations. As such, the ALU may be an ideal piece of hardware to more efficiently scale vectors. However, because the ALU may often be designed to perform only simple operations such as addition, subtraction, AND, and OR operations, the ALU may not support multiplication or division operations necessary to implement the techniques described above to scale a vector, which typically include dividing components of a vector by the largest component.

In accordance with aspects of the present disclosure, at least one processor, such as a GPU or a CPU, may receive components of a vector, wherein each of the components of the vector comprises at least an exponent and may determine a maximum exponent out of respective exponents of the components of the vector. The at least one processor may further determine a scaling value based at least in part on the maximum exponent. An ALU of the CPU or the GPU may scale the vector, by subtracting the scaling factor from each of the respective exponents of the components of the vector.

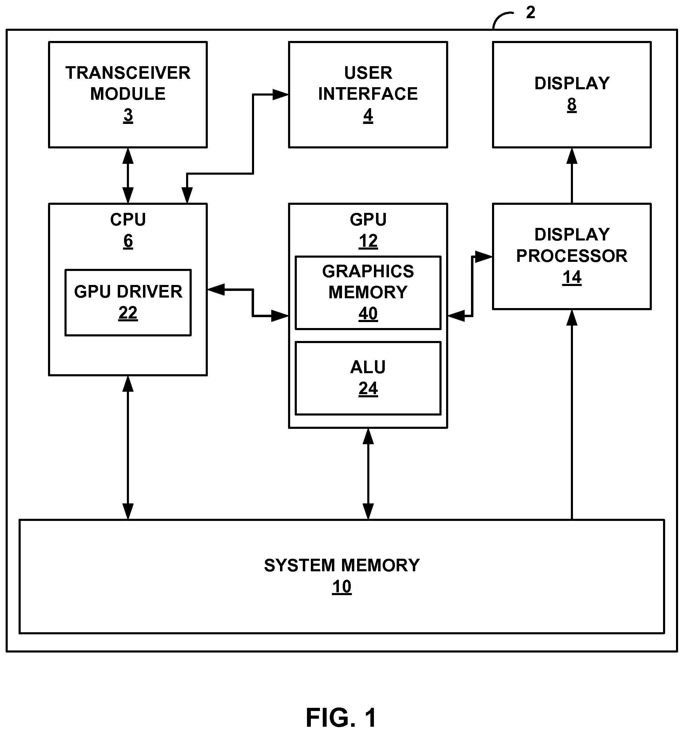

FIG. 1 is a block diagram illustrating an example computing device that may be configured to implement one or more aspects of this disclosure. As shown in FIG. 1, computing device 2 may be a computing device including but not limited to video devices, media players, set-top boxes, wireless handsets such as mobile telephones and so-called smartphones, personal digital assistants (PDAs), desktop computers, laptop computers, gaming consoles, video conferencing units, tablet computing devices, and the like. In the example of FIG. 1, computing device 2 may include central processing unit (CPU) 6, system memory 10, and GPU 12. Computing device 2 may also include display processor 14, transceiver module 3, user interface 4, and display 8. Transceiver module 3 and display processor 14 may both be part of the same integrated circuit (IC) as CPU 6 and/or GPU 12, may both be external to the IC or ICs that include CPU 6 and/or GPU 12, or may be formed in the IC that is external to the IC that includes CPU 6 and/or GPU 12.

Computing device 2 may include additional modules or units not shown in FIG. 1 for purposes of clarity. For example, computing device 2 may include a speaker and a microphone, neither of which are shown in FIG. 1, to effectuate telephonic communications in examples where computing device 2 is a mobile wireless telephone, or a speaker where computing device 2 is a media player. Computing device 2 may also include a video camera. Furthermore, the various modules and units shown in computing device 2 may not be necessary in every example of computing device 2. For example, user interface 4 and display 8 may be external to computing device 2 in examples where computing device 2 is a desktop computer or other device that is equipped to interface with an external user interface or display.

Examples of user interface 4 include, but are not limited to, a trackball, a mouse, a keyboard, and other types of input devices. User interface 4 may also be a touch screen and may be incorporated as a part of display 8. Transceiver module 3 may include circuitry to allow wireless or wired communication between computing device 2 and another device or a network. Transceiver module 3 may include modulators, demodulators, amplifiers and other such circuitry for wired or wireless communication.

Processor 6 may be a microprocessor, such as a central processing unit (CPU) configured to process instructions of a computer program for execution. Processor 6 may comprise a general-purpose or a special-purpose processor that controls operation of computing device 2. A user may provide input to computing device 2 to cause processor 6 to execute one or more software applications. The software applications that execute on processor 6 may include, for example, an operating system, a word processor application, an email application, a spreadsheet application, a media player application, a video game application, a graphical user interface application or another program. Additionally, processor 6 may execute GPU driver 22 for controlling the operation of GPU 12. The user may provide input to computing device 2 via one or more input devices (not shown) such as a keyboard, a mouse, a microphone, a touch pad or another input device that is coupled to computing device 2 via user input interface 4.

The software applications that execute on processor 6 may include one or more graphics rendering instructions that instruct processor 6 to cause the rendering of graphics data to display 8. In some examples, the software instructions may conform to a graphics application programming interface (API), such as, e.g., an Open Graphics Library (OpenGL®) API, an Open Graphics Library Embedded Systems (OpenGL ES) API, a Direct3D API, an X3D API, a RenderMan API, a WebGL API, or any other public or proprietary standard graphics API. In order to process the graphics rendering instructions, processor 6 may issue one or more graphics rendering commands to GPU 12 (e.g., through GPU driver 22) to cause GPU 12 to perform some or all of the rendering of the graphics data. In some examples, the graphics data to be rendered may include a list of graphics primitives, e.g., points, lines, triangles, quadrilaterals, triangle strips, etc.

GPU 12 may be configured to perform graphics operations to render one or more graphics primitives to display 8. Thus, when one of the software applications executing on processor 6 requires graphics processing, processor 6 may provide graphics commands and graphics data to GPU 12 for rendering to display 8. The graphics data may include, e.g., drawing commands, state information, primitive information, texture information, etc. GPU 12 may, in some instances, be built with a highly-parallel structure that provides more efficient processing of complex graphic-related operations than processor 6. For example, GPU 12 may include a plurality of processing elements, such as shader units, that are configured to operate on multiple vertices or pixels in a parallel manner. The highly parallel nature of GPU 12 may, in some instances, allow GPU 12 to draw graphics images (e.g., GUIs and two-dimensional (2D) and/or three-dimensional (3D) graphics scenes) onto display 8 more quickly than drawing the scenes directly to display 8 using processor 6.

GPU 12 may, in some instances, be integrated into a motherboard of computing device 2. In other instances, GPU 12 may be present on a graphics card that is installed in a port in the motherboard of computing device 2 or may be otherwise incorporated within a peripheral device configured to interoperate with computing device 2. GPU 12 may include one or more processors, such as one or more microprocessors, application specific integrated circuits (ASICs), field programmable gate arrays (FPGAs), digital signal processors (DSPs), or other equivalent integrated or discrete logic circuitry. GPU 12 may also include one or more processor cores, so that GPU 12 may be referred to as a multi-core processor.

GPU 12 may be directly coupled to graphics memory 40. Thus, GPU 12 may read data from and write data to graphics memory 40 without using a bus. In other words, GPU 12 may process data locally using a local storage, instead of off-chip memory. Such graphics memory 40 may be referred to as on-chip memory. This allows GPU 12 to operate in a more efficient manner by eliminating the need of GPU 12 to read and write data via a bus, which may experience heavy bus traffic. In some instances, however, GPU 12 may not include a separate memory, but instead utilize system memory 10 via a bus. Graphics memory 40 may include one or more volatile or non-volatile memories or storage devices, such as, e.g., random access memory (RAM), static RAM (SRAM), dynamic RAM (DRAM), erasable programmable ROM (EPROM), electrically erasable programmable ROM (EEPROM), Flash memory, a magnetic data media or an optical storage media.

In some examples, GPU 12 may store a fully formed image in system memory 10. Display processor 14 may retrieve the image from system memory 10 and output values that cause the pixels of display 8 to illuminate to display the image. Display 8 may the display of computing device 2 that displays the image content generated by GPU 12. Display 8 may be a liquid crystal display (LCD), an organic light emitting diode display (OLED), a cathode ray tube (CRT) display, a plasma display, or another type of display device.

As discussed above, GPU 12 may include ALU 24, which may be a digital circuit that performs integer arithmetic, floating point, and logical operations. Operations that may be performed by ALU 24 may include addition, subtraction, and bitwise operations. In some examples, ALU 24 may not be able to perform operations such as multiplication and division. In some examples, processor 6 may also include an ALU that may operate similarly as ALU 24 in that it may be a digital circuit that performs arithmetic and logical operations.

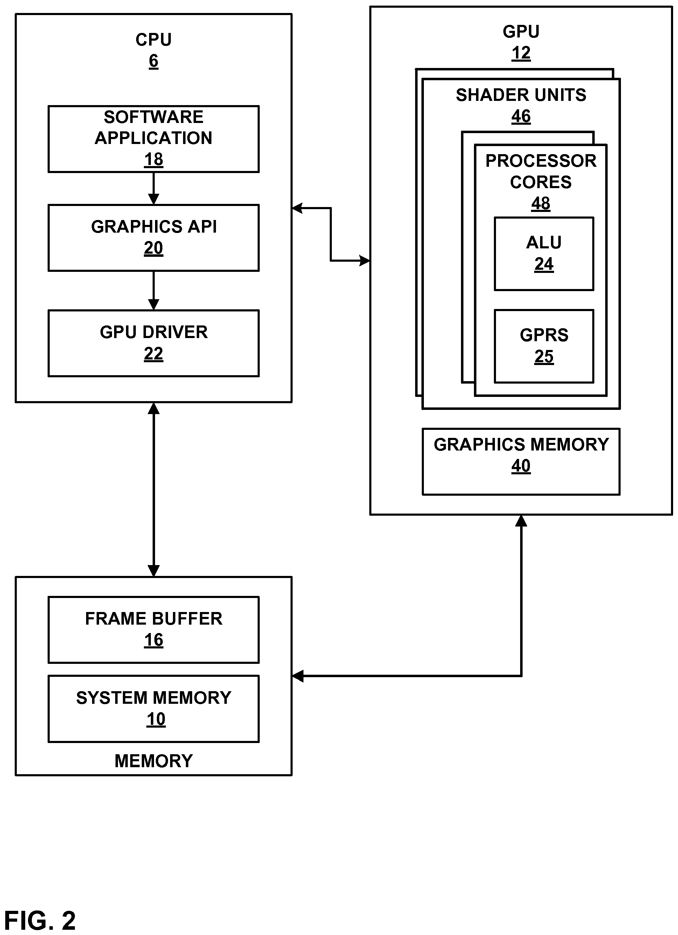

FIG. 2 is a block diagram illustrating example implementations of processor 6, GPU 12, and system memory 10 of FIG. 1 in further detail. As shown in FIG. 2, processor 6 may include at least one software application 18, graphics API 20, and GPU driver 22, each of which may be one or more software applications or services that execute on processor 6.

Memory available to processor 6 and GPU 12 may include system memory 10 and frame buffer 16. Frame buffer 16 may be a part of system memory 10 or may be separate from system memory 10. Frame buffer 16 may store rendered image data.

Software application 18 may be any application that utilizes the functionality of GPU 12. For example, software application 18 may be a GUI application, an operating system, a portable mapping application, a computer-aided design program for engineering or artistic applications, a video game application, or another type of software application that uses 2D or 3D graphics.

Software application 18 may include one or more drawing instructions that instruct GPU 12 to render a graphical user interface (GUI) and/or a graphics scene. For example, the drawing instructions may include instructions that define a set of one or more graphics primitives to be rendered by GPU 12. In some examples, the drawing instructions may, collectively, define all or part of a plurality of windowing surfaces used in a GUI. In additional examples, the drawing instructions may, collectively, define all or part of a graphics scene that includes one or more graphics objects within a model space or world space defined by the application.

Software application 18 may invoke GPU driver 22, via graphics API 20, to issue one or more commands to GPU 12 for rendering one or more graphics primitives into displayable graphics images. For example, software application 18 may invoke GPU driver 22, via graphics API 20, to provide primitive definitions to GPU 12. In some instances, the primitive definitions may be provided to GPU 12 in the form of a list of drawing primitives, e.g., triangles, rectangles, triangle fans, triangle strips, etc. The primitive definitions may include vertex specifications that specify one or more vertices associated with the primitives to be rendered. The vertex specifications may include positional coordinates for each vertex and, in some instances, other attributes associated with the vertex, such as, e.g., color coordinates, normal vectors, and texture coordinates. The primitive definitions may also include primitive type information (e.g., triangle, rectangle, triangle fan, triangle strip, etc.), scaling information, rotation information, and the like.

Based on the instructions issued by software application 18 to GPU driver 22, GPU driver 22 may formulate one or more commands that specify one or more operations for GPU 12 to perform in order to render the primitive. When GPU 12 receives a command from CPU 6, a graphics processing pipeline decodes the command and configures the graphics processing pipeline to perform the operation specified in the command. For example, an input-assembler in the graphics processing pipeline may read primitive data and assemble the data into primitives for use by the other graphics pipeline stages in a graphics processing pipeline. After performing the specified operations, the graphics processing pipeline outputs the rendered data to frame buffer 16 associated with a display device.

Frame buffer 16 stores destination pixels for GPU 12. Each destination pixel may be associated with a unique screen pixel location. In some examples, frame buffer 16 may store color components and a destination alpha value for each destination pixel. For example, frame buffer 16 may store Red, Green, Blue, Alpha (RGBA) components for each pixel where the "RGB" components correspond to color values and the "A" component corresponds to a destination alpha value. Although frame buffer 16 and system memory 10 are illustrated as being separate memory units, in other examples, frame buffer 16 may be part of system memory 10.

In some examples, a graphics processing pipeline may include one or more of a vertex shader stage, a hull shader stage, a domain shader stage, a geometry shader stage, and a pixel shader stage. These stages of the graphics processing pipeline may be considered shader stages. These shader stages may be implemented as one or more shader programs that execute on shader units 46 in GPU 12. Shader units 46 may comprise one or more shader units configured as a programmable pipeline of processing components. In some examples, shader units 46 may be referred to as "shader processors" or "unified shaders," and may perform geometry, vertex, pixel, or other shading operations to render graphics.

GPU 12 may designate shader units 46 to perform a variety of shading operations such as vertex shading, hull shading, domain shading, geometry shading, pixel shading, and the like by sending commands to shader units 46 to execute one or more of a vertex shader stage, a hull shader stage, a domain shader stage, a geometry shader stage, and a pixel shader stage in a graphics processing pipeline. In some examples, GPU driver 22 may be configured to compile one or more shader programs, and to download the compiled shader programs onto one or more programmable shader units contained within GPU 12. The shader programs may be written in a high level shading language, such as, e.g., an OpenGL Shading Language (GLSL), a High Level Shading Language (HLSL), a C for Graphics (Cg) shading language, etc. The compiled shader programs may include one or more instructions that control the operation of shader units 46 within GPU 12. For example, the shader programs may include vertex shader programs that may be executed by shader units 46 to perform the functions of a vertex shader stage, hull shader programs that may be executed by shader units 46 to perform the functions of a hull shader stage, domain shader programs that may be executed by shader unit 46 to perform the functions of a domain shader stage, geometry shader programs that may be executed by shader unit 46 to perform the functions of a geometry shader stage and/or pixel shader programs that may be executed by shader units 46 to perform the functions of a pixel shader. A vertex shader program may control the execution of a programmable vertex shader unit or a unified shader unit, and include instructions that specify one or more per-vertex operations.

Shader units 46 may include processor cores 48, each of which may include one or more components for fetching and decoding operations, one or more arithmetic logic units for carrying out arithmetic calculations, one or more memories, caches, and registers. In some examples, processor cores 48 may also be referred to as scalar processing elements. Each of processor cores 48 may include general purpose registers 25. General purpose registers 25 may store data to be directly accessed by ALU 24 in processor cores 48. For example, general purpose registers 25 may store the vector components to be scaled by ALU 24 and may also store the scaled vector components outputted by ALU 24.

Each of processor cores 48 may include a scalar ALU, such as ALU 24. As discussed above, ALU 24 may be a digital circuit that performs integer arithmetic, floating point, and logical operations. Operations that may be performed by ALU 24 may include addition, subtraction, and bitwise operations. In some examples, ALU 24 may not be able to perform operations such as multiplication and division. In accordance with aspects of the present disclosure, ALU 24 may scale a vector by scaling vector's components. ALU 24 may also output the scaled components of the vector to graphics memory 40 or general purpose registers 25.

Graphics memory 40 is on-chip storage or memory that physically integrated into the integrated circuit of GPU 12. Because graphics memory 40 is on-chip, GPU 12 may be able to read values from or write values to graphics memory 40 more quickly than reading values from or writing values to system memory 10 via a system bus. Graphics memory 40 may store components of a vector and may also store scaled components of a vector after scaling by ALU 24. Graphics memory 40 may store the components of the vector in floating point format, so that each component may be stored in graphics memory 40 as a signed bit, a significant, and an exponent.

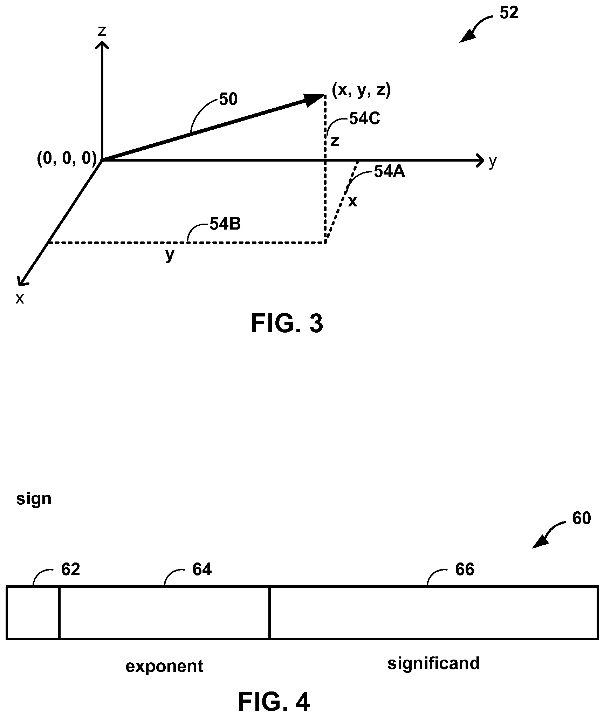

FIG. 3 is a block diagram illustrating an example three-dimensional vector that may be scaled by CPU 6 or GPU 12. As shown in FIG. 3, vector 50 in three-dimensional Cartesian coordinate system 52 may be represented via a tuple (x, y, z) that indicates the value of the respective components 54A-54C ("components 54") of vector 50. Components 54 of vector 50 may include x component 54A, y component 54B, and z component 54C.

As discussed above, each component of components 54 of vector 50 may be a floating point value that is stored in graphics memory 40 or general purpose registers 25 as a signed bit, a significand, and an exponent. For example, an example floating point value 1.2345 may be equal to 12345^{∗}10⁻⁴, such that 12345 may be the significand or mantissa and -4 may be the exponent of base 10. In other examples, the exponent may be an exponent of base 2. To represent negative exponent values, the exponent may be biased or offset, so that exponent values are converted to positive values. For example, the value 15 may be added to an exponent so that an exponent value of -4 may be stored in memory as 11.

FIG. 4 is a conceptual diagram illustrating an example floating point format for representing each component of components 54 of vector 50. As discussed above, each component of components 54 of vector 50 may be a floating point value. As shown in FIG. 4, each component of components 54 may be represented in floating point format 60. Floating point format 60 may include sign bit 62 indicating the sign of the floating point value represented by floating point format 60. Sign bit 62 may be 1 if the sign of the floating point value is negative and may be 0 if the sign of the floating point value is positive. Floating point format 60 may further include exponent 64 and significand 66. In one example, for a 32-bit IEEE floating point format 60, sign bit 62 may be one bit, exponent 64 may be 8 bits with a bias of 127, and significand 66 may be 23 bits with the integer hidden. For example, the floating point value -82.3125 may be equal to-1.0100100101₂^{∗}2⁶. In this example, sign bit 62 may be set to 1. Exponent 64 may be 10000101, which is 133₁₀ due to a bias of 127, and significand 66 may be 01001001010000000000000 because the integer bit may be hidden.

In accordance with aspects of the present disclosure, processor 6 or GPU 12 may use ALU 24 to scale vector 50 so that processor 6 or GPU 12 may perform vector normalization of vector 50 without overflowing registers that store the intermediate results of the vector normalization operation. Because ALU 24 may be hardware circuitry, such scaling of vector 50 may be performed in hardware instead of being performed in software that is executed by, for example, shader units 46. Furthermore, because ALU 24 may include functionality for performing addition and subtraction operations but may not include functionality for performing multiplication and/or division operations, ALU 24 may be able to scale vector 50 without performing either multiplication or division operations. To scale vector 50, GPU 12 may receive components 54 of vector 50. For example, if vector 50 is a three-dimensional vector, GPU 12 may receive x-component 54A, y-component 54B, and z-component 54C of vector 50. Components 54 of vector 50 may be store in memory, such as system memory 10, graphics memory 40, the memory of shader units 46, general purpose registers 25, and the like.

As discussed above, components 54 of vector 50 may each be a floating point value including at least a significand and an exponent. GPU 12 may determine the maximum exponent out of the exponents of components 54. For example, if the exponents of components 54 are -1, 2, and 5, GPU 12 may determine that the maximum exponent out of the exponents of components 54 is 5. In some examples, determining the maximum exponent out of the exponents of components 54 may include determining the maximum value exponent out of the exponents of components 54. Thus, for example, if the exponents of components 54 are -1, 2, and 5, GPU 12 may determine that the maximum value exponent out of components 54 is 5, because 5 is larger than 2 or -1.

Responsive to GPU 12 determining the maximum exponent out of the exponents of component 54, GPU 12 may determine a scaling value for scaling each of the exponents of component 54. In one example, the scaling value may be equal to the maximum exponent, so that the scaling value may be 5 for the exponents of components 54. In another example, GPU 12 may determine the scaling value to prevent underflow and/or overflow of the scaled exponents after scaling. In this case, GPU 12 may determine the scaling value based at least in part on the maximum exponent. For example, the scaling value may be the maximum exponent + a constant. For example, the scaling value may be the maximum exponent - (maximum_representable_exponent - 1)/2 + 1. The maximum_representable_exponent may be a maximum representable exponent that is a constant derived from the floating point format of components 54. For example, for 32-bit IEEE floating point numbers, the maximum representable exponent is 128. The exponent range is [-127, 128] (i.e., from -127 to 128 inclusive) because the exponent in a 32-bit floating point number is represented with 8 bits. In another example, GPU 12 may determine the scaling value to be (maximum exponent - 1)/2 - 2. Therefore, given a maximum exponent of 15, the scaling value may be (15-1)/2-2, which may be 5.

Responsive to GPU 12 determining the scaling value, ALU 24 may be configured to scale each component of components 54 by subtracting the scaling value from each exponent of components 54. For example, given exponent values of -1, 2, an 5 for x-component 54A, y-component 54B, and z-component 54C of vector 50, given that GPU 12 determines 5 is the maximum exponent out of the exponents of components 54, and given that GPU 12 determines the scaling value to be the value of the maximum exponent (i.e., setting scaling value to 5), ALU 24 may subtract 5 from the exponent value of -1 for x-component 54A, ALU 24 may subtract 5 from the exponent value of 2 for y-component 54B, and ALU 24 may subtract 5 from the exponent value of 5 for z-component 54C, resulting in scaled components 54 having exponent values of -6, -3, and 0, respectively for x-component 54A, y-component 54B, and z-component 54C. The resulting scaled components that include the exponents outputted by ALU 24 may be stored in memory, such as graphics memory 40, system memory 10, general purpose registers 25, and the like.

As discussed above, in some examples, the exponents of components 54 may be biased exponents. GPU 12 and ALU 24 may handle biased components in a similar manner as unbiased exponents. For example, if the values of the exponents of components 54 of -1, 2, and 5 are biased by 15, so that 15 is added to each exponent of components 54, the values of the biased exponents of component 54 may be 14, 17, and 20. Accordingly, GPU 12 may determine that the maximum exponent out of the biased exponents of components 54 is 20. Responsive to GPU 12 determining the maximum exponent out of the biased exponents of component 54, GPU 12 may determine a scaling value based at least in part on the maximum exponent. In this example, GPU 12 may set the scaling value to the value of the maximum exponent. In response to GPU 12 determining the scaling value, ALU 24 may scale each component of components 54 by subtracting the scaling value from each exponent of components 54. For example, given biased exponent values of 14, 17, and 20 for x-component 54A, y-component 54B, and z-component 54C of vector 50, and given that GPU 12 determines 20 is the maximum exponent out of the exponents of components 54 and that the scaling value is set to the value of the maximum exponent, ALU 24 may subtract 20 from the exponent value of 14 for x-component 54A, ALU 24 may subtract 20 from the exponent value of 17 for y-component 54B, and ALU 24 may subtract 20 from the exponent value of 20 for z-component 54C. ALU 24 may add a bias of 15 to each exponent of components 54, resulting in scaled components 54 having biased exponent values of 9, 12, and 15, respectively for x-component 54A, y-component 54B, and z-component 54C.

ALU 24 may be configured to output one scaled component per clock cycle, so that ALU 24 may output the scaled x-component in a first clock cycle, the scaled y-component in a second clock cycle, and the scaled z-component in a third clock cycle. Example pseudocode for performing scaling of vector 50 may be expressed as follows:

```
 if (src0, src1, or src2 is INF or NaN){ // output = input
       dst = src0;
       dst+1 = src1;
       dst+2 = src2;
 }
 else maxexp = max(src0.exp, src1.exp, src2.exp);
 if(src0 is 0 or denorm)
       dst = 0 preserving src0 sign;
       else dst.exp = src0.exp - maxexp;
       if(src1 is 0 or denorm)
       dst = 0 preserving src1 sign;
       else (dst+1).exp = src1.exp - maxexp;
       if(src2 is 0 or denorm)
       dst = 0 preserving src2 sign;
       else (dst+2).exp = src2.exp - maxexp;
```

As shown in the pseudocode above, src0, src1, and src2 may be the source memory locations of components of a three dimensional vector, dst may be the destination location in memory for a first scaled component, dst+1 may be the next consecutive destination location in memory for a second scaled component, and dst+2 may be the next consecutive destination location in memory for a third scaled component. As can be seen, the scaled components may be stored in consecutive memory locations in memory.

As shown above, GPU 12 may determine if any of the components are infinite or not a number. A component may be not a number if the component is an undefined or unrepresentable value. A component that is not a number may have exponent 64 filled with 1s and may have significand 66 be a non-zero value. If so, the components of the vector are not scaled. Otherwise, GPU 12 may determine a scaling value based at least in part on the maximum exponent out of the exponents of the components. For each of the components in src0, src1, and src2, if the exponent is zero or a denormal number, then the component is not scaled. A denormal number may be any non-zero number with a magnitude that is smaller than the smallest normal number. Otherwise, ALU 24 may scale the component by subtracting the exponent of the component by the scaling value. In some examples, any of the destination memory locations dst, dst+1, or dst+2 may overlap with the source memory locations src0, src1, or src2.

GPU 12 can provide a scaling function for outputting scaled components of a vector as (rpt2) scale.x, (r)x, (x, y, z);. (rpt2) may indicate than the scaling instruction will repeat two times after initial execution, so that it may execute a total of three times to output scaled x, y, and z components of a three-dimensional vector, scale.x may be the function name for the scaling function, where the x in scale.x may be the starting location of the source memory locations that store the unscaled components of the vector. (r)x may indicate that the scaling instruction will be repeated, and the x in (r)x may be the starting location of the destination memory locations for storing the scaled components of the vector, (x, y, z) may be the components of the vector that is to be scaled by the scaling function. The throughput for ALU 24, which may be the number of scaling instructions that can be issued to ALU 24's pipeline in a certain amount of time, may be 3 cycles per scaling instruction. The latency of ALU 24 in performing the scaling instruction, which may be the total amount of time that is taken to execute the scaling instruction from issuing to completion, may depend on the implementation of the scaling instruction.

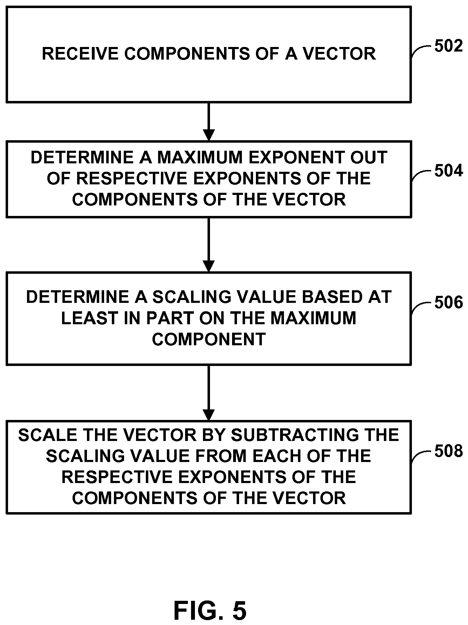

FIG. 5 is a flowchart illustrating an example process for scaling a vector. As shown in FIG. 5, the process may include receiving, by processor 6 or GPU 12, components of a vector, wherein each of the components of the vector comprises at least an exponent; (502). The process may further include determining, by processor 6 or GPU 12, a maximum exponent out of respective exponents of the components of the vector (504). The process may further include determining, by processor 6 or GPU 12, a scaling value based at least in part on the maximum component (506). The process may further include scaling, by ALU 24 of processor 6 or GPU 12, the vector by subtracting the scaling value from each of the respective exponents of the components of the vector (508).

In some examples, scaling the vector may further include scaling, by ALU 24, the vector without performing a multiplication operation or a division operation. In some examples, each of the components of the vector may be a floating point number, and wherein the floating point number may be represented as a sign bit, a significand, and the exponent. In some examples, the vector may comprise a three-dimensional vector, and the components of the vector may comprise an x-component, a y-component, and a z-component. In some examples, scaling the vector may include scaling, by ALU 24, the x-component of the vector by subtracting the scaling value from a first exponent of the x-component of the vector in a first clock cycle, scaling, by ALU 24, the y-component of the vector by subtracting the scaling value from a second exponent of the y-component of the vector in a second clock cycle, and scaling, by ALU 24, the z-component of the vector by subtracting the scaling value from a third exponent of the z-component of the vector in a third clock cycle. In some examples, the process may further include outputting the scaled x-component, the scaled y-component, and the scaled z-component into consecutive storage locations in memory. In some examples ALU 24 may be a hardware digital circuit.

In some examples, determining a scaling value based at least in part on the maximum exponent may include determining the scaling value to be the maximum exponent. In some other examples, determining a scaling value based at least in part on the maximum exponent may include determining the scaling value based at least in part on the maximum exponent and a maximum representative exponent.

In one or more examples, the functions described may be implemented in hardware, software, firmware, or any combination thereof. If implemented in software, the functions may be stored on or transmitted over as one or more instructions or code on a computer-readable medium. Computer-readable media may include computer data storage media or communication media including any medium that facilitates transfer of a computer program from one place to another. Data storage media may be any available media that can be accessed by one or more computers or one or more processors to retrieve instructions, code and/or data structures for implementation of the techniques described in this disclosure. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

The code may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor" and "processing unit," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (i.e., a chip set). Various components, modules or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples have been described. These and other examples are within the scope of the following claims.

## Claims

1. A method for scaling a vector, the method comprising:
receiving, by at least one processor, components of a vector, wherein each of the components of the vector comprises at least an exponent;
determining, by the at least one processor, a maximum exponent out of respective exponents of the components of the vector; and
scaling, by an arithmetic logic unit (ALU) of the at least one processor, the vector, including for each exponent of the respective exponents of the components of the vector:
setting the respective component to zero if the respective component is zero or a denormal number; and
subtracting the maximum exponent from the exponent of the respective component if the respective component is not zero and is not a denormal number.

2. The method of claim 1, wherein each of the components of the vector comprises a floating point number, and wherein the floating point number is represented as a sign bit, a significand, and the exponent.

3. The method of claim 1, wherein:
the vector comprises a three-dimensional vector; and
the components of the vector comprise an x-component, a y-component, and a z-component.

4. The method of claim 3, wherein scaling the vector further comprises:
scaling, by the ALU, the x-component of the vector by subtracting the maximum exponent from a first exponent of the x-component of the vector in a first clock cycle;
scaling, by the ALU, the y-component of the vector by subtracting the maximum exponent from a second exponent of the y-component of the vector in a second clock cycle; and
scaling, by the ALU, the z-component of the vector by subtracting the maximum exponent from a third exponent of the z-component of the vector in a third clock cycle.

5. The method of claim 4, further comprising:
outputting the scaled x-component, the scaled y-component, and the scaled z-component into consecutive storage locations in memory.

6. The method of claim 1, wherein the ALU comprises a hardware digital circuit.

7. An apparatus for scaling a vector, the apparatus comprising:
a memory configured to store components of a vector, wherein each of the components of the vector comprises at least an exponent;
at least one processor configured to:
determine a maximum exponent out of respective exponents of the components of the vector, and
an arithmetic logic unit (ALU) configured to scale the vector, including for each exponent of the respective exponents of the components of the vector:
setting the respective component to zero if the respective component is zero or a denormal number; and
subtracting the maximum exponent from the exponent of the respective component if the respective component is not zero and not a denormal number.

8. The apparatus of claim 7, wherein each of the components of the vector comprises a floating point number, and wherein the floating point number is represented as a sign bit, a significand, and the exponent.

9. The apparatus of claim 7, wherein:
the vector comprises a three-dimensional vector; and
the components of the vector comprise an x-component, a y-component, and a z-component.

10. The apparatus of claim 9, wherein the ALU is configured to:
scale the x-component of the vector by subtracting the maximum exponent from a first exponent of the x-component of the vector in a first clock cycle;
scale the y-component of the vector by subtracting the maximum exponent from a second exponent of the y-component of the vector in a second clock cycle; and
scale the z-component of the vector by subtracting the maximum exponent from a third exponent of the z-component of the vector in a third clock cycle.

11. The apparatus of claim 10, wherein the ALU is configured to:
output the scaled x-component, the scaled y-component, and the scaled z-component into consecutive storage locations in the memory.

12. The apparatus of claim 7, wherein the ALU comprises a hardware digital circuit.

13. A computer-readable storage medium storing instructions that, when executed, cause one or more programmable processors to perform the method according to any one of claims 1 to 6.

## Patentansprüche

1. Verfahren zum Skalieren eines Vektors, wobei das Verfahren Folgendes beinhaltet:
Empfangen, durch wenigstens einen Prozessor, von Komponenten eines Vektors, wobei jede der Komponenten des Vektors wenigstens einen Exponenten umfasst;
Bestimmen, durch den wenigstens einen Prozessor, eines maximalen Exponenten aus jeweiligen Exponenten der Komponenten des Vektors; und
Skalieren, durch eine arithmetische Logikeinheit (ALU) des wenigstens einen Prozessors, des Vektors, einschließlich für jeden Exponenten der jeweiligen Exponenten der Komponenten des Vektors:
Setzen der jeweiligen Komponente auf null, wenn die jeweilige Komponente null oder eine denormale Zahl ist; und
Subtrahieren des maximalen Exponenten vom Exponenten der jeweiligen Komponente, wenn die jeweilige Komponente nicht null und keine denormale Zahl ist.

2. Verfahren nach Anspruch 1, wobei jede der Komponenten des Vektors eine Gleitkommazahl ist und wobei die Gleitkommazahl als ein Vorzeichenbit, ein Signifikand und der Exponent repräsentiert wird.

3. Verfahren nach Anspruch 1, wobei:
der Vektor einen dreidimensionalen Vektor umfasst; und
die Komponenten des Vektors eine x-Komponente, eine y-Komponente und eine z-Komponente umfassen.

4. Verfahren nach Anspruch 3, wobei das Skalieren des Vektors ferner Folgendes beinhaltet:
Skalieren, durch die ALU, der x-Komponente des Vektors durch Subtrahieren des maximalen Exponenten von einem ersten Exponenten der x-Komponente des Vektors in einem ersten Taktzyklus;
Skalieren, durch die ALU, der y-Komponente des Vektors durch Subtrahieren des maximalen Exponenten von einem zweiten Exponenten der y-Komponente des Vektors in einem zweiten Taktzyklus; und
Skalieren, durch die ALU, der z-Komponente des Vektors durch Subtrahieren des maximalen Exponenten von einem dritten Exponenten der z-Komponente des Vektors in einem dritten Taktzyklus.

5. Verfahren nach Anspruch 4, das ferner Folgendes beinhaltet:
Ausgeben der skalierten x-Komponente, der skalierten y-Komponente und der skalierten z-Komponente zu konsekutiven Speicherorten im Speicher.

6. Verfahren nach Anspruch 1, wobei die ALU eine digitale Hardware-Schaltung umfasst.

7. Vorrichtung zum Skalieren eines Vektors, wobei die Vorrichtung Folgendes umfasst:
einen Speicher, konfiguriert zum Speichern von Komponenten eines Vektors, wobei jede der Komponenten des Vektors wenigstens einen Exponenten umfasst;
wenigstens einen Prozessor, konfiguriert zum:
Bestimmen eines maximalen Exponenten aus jeweiligen Exponenten der Komponenten des Vektors, und
eine arithmetische Logikeinheit (ALU), konfiguriert zum Skalieren des Vektors, einschließlich für jeden Exponenten der jeweiligen Exponenten der Komponenten des Vektors:
Setzen der jeweiligen Komponente auf null, wenn die jeweilige Komponente null oder eine denormale Zahl ist; und
Subtrahieren des maximalen Exponenten vom Exponenten der jeweiligen Komponente, wenn die jeweilige Komponente nicht null und keine denormale Zahl ist.

8. Vorrichtung nach Anspruch 7, wobei jede der Komponenten des Vektors eine Gleitkommazahl umfasst und wobei die Gleitkommazahl als ein Vorzeichenbit, als ein Signifikand und der Exponent repräsentiert wird.

9. Vorrichtung nach Anspruch 7, wobei:
der Vektor einen dreidimensionalen Vektor umfasst; und
die Komponenten des Vektors eine x-Komponente, eine y-Komponente und eine z-Komponente umfassen.

10. Vorrichtung nach Anspruch 9, wobei die ALU konfiguriert ist zum:
Skalieren der x-Komponente des Vektors durch Subtrahieren des maximalen Exponenten von einem ersten Exponenten der x-Komponente des Vektors in einem ersten Taktzyklus;
Skalieren der y-Komponente des Vektors durch Subtrahieren des maximalen Exponenten von einem zweiten Exponenten der y-Komponente des Vektors in einem zweiten Taktzyklus; und
Skalieren der z-Komponente des Vektors durch Subtrahieren des maximalen Exponenten von einem dritten Exponenten der z-Komponente des Vektors in einem dritten Taktzyklus.

11. Vorrichtung nach Anspruch 10, wobei die ALU konfiguriert ist zum:
Ausgeben der skalierten x-Komponente, der skalierten y-Komponente und der skalierten z-Komponente zu konsekutiven Speicherorten in dem Speicher.

12. Vorrichtung nach Anspruch 7, wobei die ALU eine digitale Hardware-Schaltung umfasst.

13. Computerlesbares Speichermedium, auf dem Befehle gespeichert sind, die bei Ausführung bewirken, dass ein oder mehrere programmierbare Prozessoren das Verfahren nach einem der Ansprüche 1 bis 6 durchführen.

## Revendications

1. Procédé de mise à l'échelle d'un vecteur, le procédé comprenant :
la réception, par au moins un processeur, de composantes d'un vecteur, chacune des composantes du vecteur comprenant au moins un exposant ;
la détermination, par l'au moins un processeur, d'un exposant maximum parmi des exposants respectifs des composantes du vecteur ; et
la mise à l'échelle, par une unité logique arithmétique (ALU) de l'au moins un processeur, du vecteur, comportant pour chaque exposant des exposants respectifs des composantes du vecteur :
le réglage à zéro de la composante respective si la composante respective est zéro ou un nombre dénormalisé ; et
la soustraction de l'exposant maximum de l'exposant de la composante respective si la composante respective n'est pas zéro et n'est pas un nombre dénormalisé.

2. Procédé selon la revendication 1, dans lequel chacune des composantes du vecteur comprend un nombre à virgule flottante, et dans lequel le nombre à virgule flottante est représenté par un bit de signe, un significande, et l'exposant.

3. Procédé selon la revendication 1, dans lequel :
le vecteur comprend un vecteur tridimensionnel ; et
les composantes du vecteur comprennent une composante x, une composante y et une composante z.

4. Procédé selon la revendication 3, dans lequel la mise à l'échelle du vecteur comprend en outre :
la mise à l'échelle, par l'ALU, de la composante x du vecteur en soustrayant l'exposant maximum d'un premier exposant de la composante x du vecteur dans un premier cycle d'horloge;
la mise à l'échelle, par l'ALU, de la composante y du vecteur en soustrayant l'exposant maximum d'un deuxième exposant de la composante y du vecteur dans un second cycle d'horloge ; et
la mise à l'échelle, par l'ALU, de la composante z du vecteur en soustrayant l'exposant maximum d'un troisième exposant de la composante z du vecteur dans un troisième cycle d'horloge.

5. Procédé selon la revendication 4, comprenant en outre :
la production en sortie de la composante x mise à l'échelle, de la composante y mise à l'échelle et de la composante z mise à l'échelle dans des emplacements de mémorisation consécutifs en mémoire.

6. Procédé selon la revendication 1, dans lequel l'ALU comprend un circuit numérique matériel.

7. Appareil de mise à l'échelle d'un vecteur, l'appareil comprenant :
une mémoire configurée pour mémoriser des composantes d'un vecteur, chacune des composantes du vecteur comprenant au moins un exposant ;
au moins un processeur configuré pour :
déterminer un exposant maximum parmi des exposants respectifs des composantes du vecteur, et
une unité logique arithmétique (ALU) configurée pour mettre à l'échelle le vecteur, comportant pour chaque exposant des exposants respectifs des composantes du vecteur :
le réglage à zéro de la composante respective si la composante respective est zéro ou un nombre dénormalisé ; et
la soustraction de l'exposant maximum de l'exposant de la composante respective si la composante respective n'est pas zéro et n'est pas un nombre dénormalisé.

8. Appareil selon la revendication 7, dans lequel chacune des composantes du vecteur comprend un nombre à virgule flottante, et dans lequel le nombre à virgule flottante est représenté par un bit de signe, un significande et l'exposant.

9. Appareil selon la revendication 7, dans lequel :
le vecteur comprend un vecteur tridimensionnel ; et
les composantes du vecteur comprennent une composante x, une composante y et une composante z.

10. Appareil selon la revendication 9, dans lequel l'ALU est configurée pour :
mettre à l'échelle la composante x du vecteur en soustrayant l'exposant maximum d'un premier exposant de la composante x du vecteur dans un premier cycle d'horloge;
mettre à l'échelle la composante y du vecteur en soustrayant l'exposant maximum d'un deuxième exposant de la composante y du vecteur dans un second cycle d'horloge ; et
mettre à l'échelle la composante z du vecteur en soustrayant l'exposant maximum d'un troisième exposant de la composante z du vecteur dans un troisième cycle d'horloge.

11. Appareil selon la revendication 10, dans lequel l'ALU est configurée pour :
produire en sortie la composante x mise à l'échelle, la composante y mise à l'échelle et la composante z mise à l'échelle dans des emplacements de mémorisation consécutifs en mémoire.

12. Appareil selon la revendication 7, dans lequel l'ALU comprend un circuit numérique matériel.

13. Support de mémorisation lisible par ordinateur mémorisant des instructions qui, à leur exécution, amènent un ou plusieurs processeurs programmables à mettre en oeuvre le procédé selon l'une quelconque des revendications 1 à 6.
